# EUROPÄISCHE PATENTSCHRIFT

(11) **EP 0 849 066 B1**
(45) Veröffentlichungstag und Bekanntmachung des Hinweises auf die Patenterteilung: **05.06.2002**
(21) Anmeldenummer: 97120581.0
(22) Anmeldetag: 25.11.1997
(51) Int. Cl.: B29C 47/90

(54) **Kalibriervorrichtung für Kunststoffprofile und Verfahren zum Betreiben der Vorrichtung**
Calibrating apparatus for plastic profile and method to use the apparatus
Dispositif de calibrage pour un profilé en matière plastique et procédé d'utiliser le dispositif

(30) Priorität: 20.12.1996 DE 19653667
(43) Veröffentlichungstag der Anmeldung: 24.06.1998
(73) Patentinhaber: THYSSEN POLYMER GMBH, 94327 Bogen (DE)
(72) Erfinder: Bugl, Alfred, 94336 Hunderdorf (DE); Bürger, Oskar, 94315 Straubing (DE)

(56) Entgegenhaltungen:
- EP-A- 0 385 285
- EP-A- 0 659 536
- DE-A- 4 028 115
- GB-A- 2 015 418
- US-A- 5 626 807

## Beschreibung

Die Erfindung betrifft eine Kalibrier- und Kühlvorrichtung für Kunststoffprofile, beispielsweise Fensterprofile und ein Verfahren zum Betreiben der Vorrichtung, die dem Extruder nachgeschaltet ist und aus einem mit strömenden Kühlmittel gefüllten Vakuumtank und mehreren darin hintereinander angeordneten Kalibratoren, sogen. Scheibenelementen für das durch die Vorrichtung mittels einen nachgeschalteten Abzug gezogene Kunststoffprofile besteht.

Solche Vorrichtungen sind an sich bekannt. Sie werden notorisch zur Kalibrierung von Kunststoffprofilen, wie z.B. Rohren, Fensterprofilen, Elektroprofilen usw. eingesetzt. Diese Vorrichtungen sind jedoch mit diversen Nachteilen behaftet, die ihren Grund einerseits in mangelnder Kühlleistung der Vorrichtungen und dem Unvermögen, sich in der unter Vakuum stehenden Kühlflüssigkeit, meist Wasser mit einer Temperatur von etwa 15°C, befindlichen Verunreinigungen, wie z.B. im Wasser schwimmende Schwebeteilchen, die auch durch Wasseraufbereitungsanlagen nicht eliminierbar sind, wie u.a. Staubkörnchen, Kalkreste, am Profil haftende Verunreinigungen usw., usf., haben.

Es wurden bereits verschiedene Versuche unternommen, die Stabilität und auch die Oberflächenqualität der extrudierten Profile zu verbessern, eine sichtbare und verifizierbare Verbesserung konnte bis jetzt allerdings nicht erreicht werden.

Geringfügige Verbesserungen der Kühlleistung wurden durch die Einführung von turbulenten Strömungen in den Vakuumtanks der Kalibriervorrichtungen erzielt, wie sie an sich seit Jahrzehnten im Einsatz sind und neuerdings beispielsweise durch das DE-GM 295 18 702 U1 und ferner durch die EP 0 659 536 zusätzlich veröffentlicht wurden. Dabei wird eine turbulente Strömung durch Öffnungen in und neben den sogen. Kalibrierscheiben sowie durch Änderung des Vakuums, Schlitze in den Stützblenden bzw. in die Kühlflüssigkeit ragende Längsstege erzielt. Auch Sprühdüsen, die Wasser auf das abzukühlende und zu kalibrierende Profil sprühen sind seit Jahrzehnten und auch aus der US-PS 5 008 051 bekannt. Auch diese vermeintlichen Problemlösungen tragen nur wenig zu Verbesserung der kalibrierten Profiloberfläche und der Maßhaltigkeit des extrudierten Profiles bei.

Der Erfindung, wie sie in den Ansprüchen beschrieben ist, liegt daher die Aufgabe zugrunde, die Kühlung und Kalibrierung von Kunststoffprofilen, wie z.B. Fensterprofilen, Elektroprofilschienen usw., so zu verbessern, daß deren Maße exakt eingehalten werden und insbesondere deren Sichtflächen glatt sind.

Die mit der Erfindung erzielten Vorteile liegen in der durch die schräg zur Extrusionsachse in jedem der Vakuum-Tank-Scheibenelemente (nachstehend kurz als V-T-S-Element bezeichnet) verlaufende und sich überlappende Kühlkanäle erzielten optisch einwandfreien Oberfläche, ohne die Abzeichnung von durch den Kalibrator gezogenen Verunreinigungen des Wassers, wie z.B. Paraffin, Staubkörnchen, Kalkresten usw. oder durch unvermeidbare an der Profiloberfläche haftende Verunreinigungen verursachten Riefen darauf, sowie einer exakten Maßhaltigkeit des extrudierten Profiles, auch über größere Längen. Ein weiterer Vorteil der mit der Erfindung vorgeschlagenen Problemlösung ist darin zu sehen, daß die Befestigung des Scheibenelementes selbstzentrierend auf die durch die Vorrichtung laufende Profilkontur wirkt und durch justierbare Paßfedern jedes einzelnen Scheibensegmentes korrigierbar ist, so daß Maßkorrekturen vorgenommen und fixiert werden können. Selbst eine sich an den Kalibriervorgang notwendigerweise anschließende, teilweise sogar spanabhebende, Nachbearbeitung des Profiles ist nicht mehr erforderlich. Es findet auch kein Abheben des Profiles mehr von der Kalibratoroberfläche statt. Ebensowenig sind Turbulenzverursacher im Vakuumtank der Vorrichtung erforderlich, weshalb die Vorrichtung auch aus wenigen Teilen besteht.

Die Erfindung ist nachstehend anhand eines in den Abbildungen dargestellten Ausführungsbeispieles näher erläutert.
Es zeigt:
Fig. 1 einen Schnitt durch eine Kühl- und Kalibriervorrichtung (Vakuumtank),
Fig. 2 einen Schnitt durch die Fig. 1 in Richtung A-A,

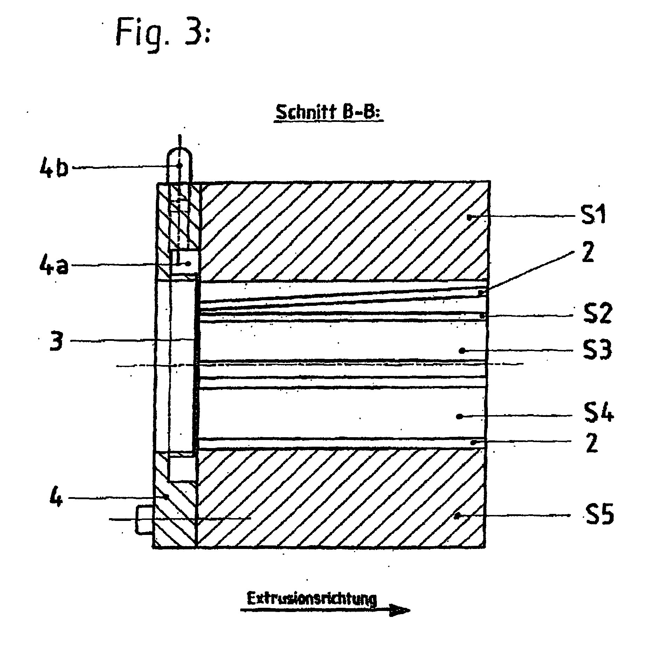

Fig. 3 einen Schnitt durch die Fig. 1 in Richtung B-B und
Fig. 4 die schematische Darstellung einer Extrusionslinie mit Kühl- und Kalibriervorrichtung.

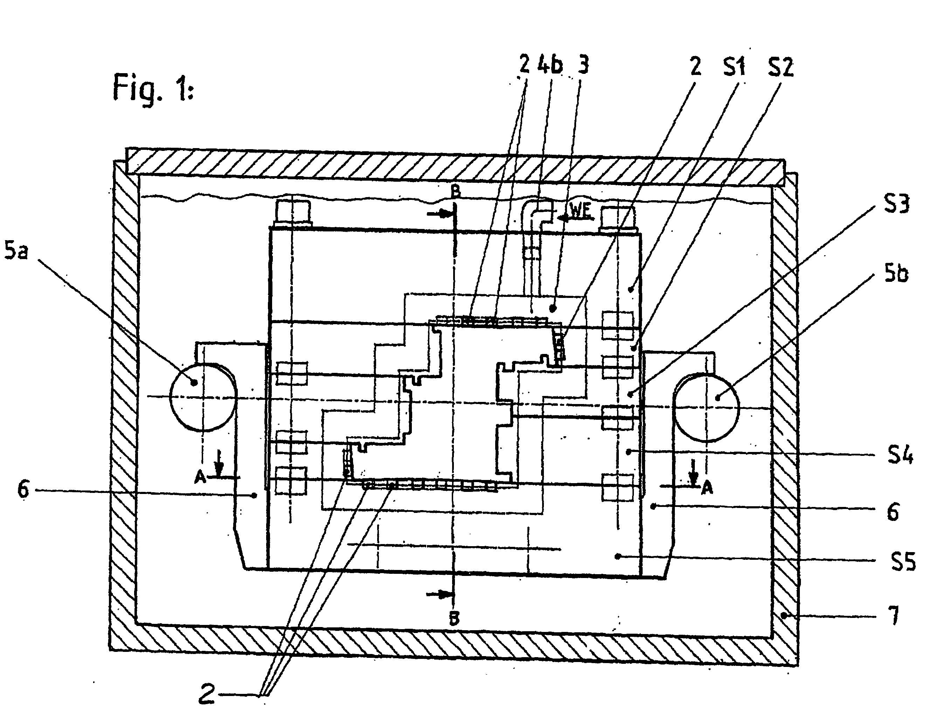

Die Fig. 1 zeigt anhand eines Querschnittes durch eine mit Wasser gefüllte und teilweise evakuierte Kühl- und Kalibriervorrichtung, einen sogen. Vakuumtank 7 im Bereich eines Scheibenelementes S die Aufteilung dieser Vakuumtank-Scheibenelemente (V-T-S) in mehrere Segmente. Im Beispiel ist ein Scheibenelement S aus fünf solchen Segmenten S1 bis S5 zusammengesetzt. Dieses aus mehreren ggf. noch mehrfach unterteilten Segmenten S1 - S5 bestehende Scheibenelement S umhüllt die zu kühlende und zu kalibrierende Profilkontur P.

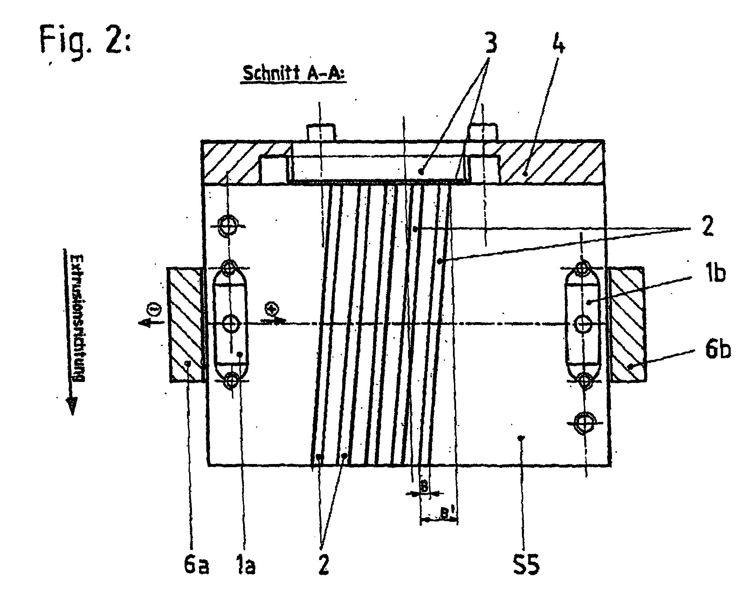

Aus der Fig.1 sind ferner mehrere Kühlkanäle 2 ersichtlich, über die die Sichtflächen des zu kalibrierenden Fensterprofiles geführt werden und somit eine glatte, von Riefen freie Oberfläche ergeben, wobei diese Kühlkanäle 2, wie aus Fig. 2 ersichtlich, schräg zur Extrusionsrichtung des zu kalibrierenden Profils verlaufen und sich vom Profileinlauf bis zum Profilauslauf aufgrund der Abstimmung ihrer lichten Weite B in ihrer Längsachse um das Maß B' überlagern. Es hat sich gezeigt, daß bei einer lichten Weite B eine Überlagerung um B' = 3 x B vorteilhaft ist. Die Oberfläche der Segmente mit Kühlkanälen, z.B. S5 kann vorteilhafterweise leicht ballig ausgebildet sein. Die Kühlkanäle 2 können von Scheibenelement S zu Scheibenelement S' eine unterschiedliche Richtung, Anzahl, Steigung, lichte Weite B, Überlagerung B', Balligkeit usw. aufweisen um das Ergebnis der Kühlung und Kalibrierung zu optimieren. Es ergeben sich somit durch die Kühlkanäle 2 gezielte Kühlbereiche und eine entsprechende Vakuumwirkung im gesamten Vakuumtank 7.

Die Anordnung der Kühlkanäle in den Segmenten S1, S2, S4 und S5 minimiert außerdem die sich auf der durchlaufenden Profilkontur ansammelnden Querkräfte und verbessert dessen Oberflächenqualität.

Wie die Abbildungen zeigen, ist dem Scheibenelement SE vorgelagert ein damit fest verbundener Sprührahmen 4 mit einem den Profileinlauf und damit dessen Kontur umhüllenden Ringkanal 4a, der in einen schmalen Spalt 3 zwischen dem Scheibenelement SE und dem Sprührahmen 4 mündet, der im übrigen aber fest mit der Vorderfront des Scheibenelementes SE verbunden ist. Der Ringkanal steht mit einem separaten Druckwasserzulauf 4b in Verbindung. Das durch den Druckwasserzulauf 4b gepreßte Kühlmedium, z.B. Wasser wird über den Ringkanal 4a des Sprührahmens durch die Kühlkanäle 2 des Scheibenelementes SE gedrückt und erzeugt dabei, zusammen mit der Wirkung des Spaltes 3 als Sprühvorhang, eine äußerst wirksame turbulente Strömung des Kühlmediums auf dem Profil P vor dem Profileinlauf in das Scheibenelement SE. Der Rest des Kühlmediums entweicht durch den Spalt 3 in den Vakuumtank 7, nimmt etwa am Profileinlauf anhaftende Verunreinigungen mit und erhöht die im Vakuumtank 7 herrschende turbulente Strömung noch zusätzlich. Für den Spalt 3 hat sich eine Breite von etwa 3/10 mm bei der Kalibrierung von Fensterprofilen als wirkungsvoll erwiesen. Auch evtl. am Kunststoffprofil P noch anhaftende Verunreinigungen werden auf diese Weise vollflächig abgelöst. Der Sprührahmen ist zu Kontrollzwecken vorzugsweise aus durchsichtigem Werkstoff gefertigt.

Jedes einzelne Segment S 1 - S5 kann sowohl in plus- als auch in minus-Richtung korrigiert werden, und zwar durch Justage der aus Fig. 2 ersichtlichen Paßfedern 1a und/oder 1b, wodurch eine Maßkorrektur der jeweiligen Profilkontur erreicht wird, was eine Nachbearbeitung des fertigen Profiles erübrigt. Die Aufhängung des Scheibenelementes SE in der Befestigung 5 und Halterung 6 wirkt selbstzentrierend auf die durchlaufende Profilkontur.

Eine solche Kühl- und Kalibriervorrichtung kann innerhalb ihres Vakuumtanks 7 mehrere hintereinander geschaltete Scheibenelemente SE mit unterschiedlicher Anordnung, Steigung, Breite B und Überlappung B' ihrer Kühlkanäle 2 enthalten, auch kann dadurch die Kontur des zu kalibrierenden Profiles P variiert werden.

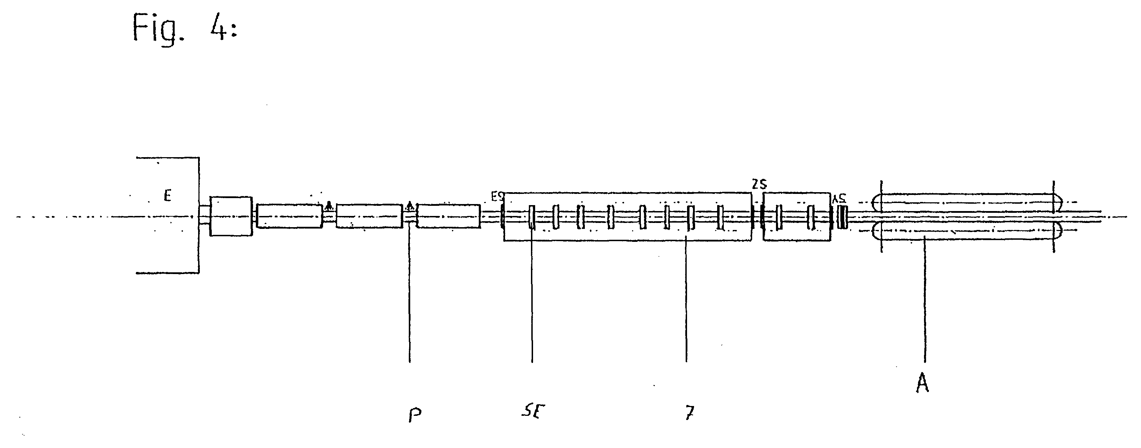

Die Fig. 4 verdeutlicht den Durchlauf eines Profiles P vom Extruder E durch die Kühl- und Kalibriervorrichtung mit ihrem Vakkumtank 7, den Scheibenelementen SE bis SE' mit Sprührahmen 4, Spalt 3 und den von Scheibenelement SE zu Scheibenelement SE die Laufrichtung wechselnden Kühlkanälen 2 und dem hinter dieser Vorrichtung angeordneten Abzug A.

Die mit der Erfindung vorgeschlagene Kühl- und Kalibriervorrichtung und das zu deren Betrieb vorgeschlagene Verfahren sind selbstverständlich nicht auf das beschriebene Beispiel einer Kalibrierung von Fensterprofilen beschränkt, sie können vielmehr mit Vorteil bei der Kühlung und Kalibrierung von beliebigen Profilen aus Kunststoffen, wie z.B. PVC, PE, PU, PB usw. angewandt werden.

## Patentansprüche

1. Kalibriervorrichtung für Kunststoffprofile die dem Extruder nachgeschaltet ist und aus einem mit strömenden Kühlmedium, z.B. Wasser gefüllten Vakuumtank und mehreren darin hintereinander angeordneten Kalibratoren, sogen. Scheibenelementen; für das durch die Vorrichtung über einen nachgeschalteten Abzug gezogene Kunststoffprofil besteht, **dadurch gekennzeichnet, daß** die Scheibenelemente (SE) aus mehreren Segmenten (S1-S5) bestehen die an der Profilkontaktfläche schräg zur Extrusionsachse verlaufende Kühlkanäle (2) besitzen, deren lichte Weite B so bemessen ist, daß sie sich innerhalb eines Scheibenelementes (SE) vom Profileinlauf bis zum Profilauslauf in der Längsachse um ein Maß B' überlagern und ein zum Profileinlauf einen schmalen Spalt freilassender Sprührahmen (4) vor dem Profileinlauf der Scheibenelemente (SE) angeordnet ist

2. Kalibriervorrichtung nach Anspruch 1, **dadurch gekennzeichnet, daß** die Kühlkanäle (2) in Extrusionsrichtung gesehen, von Scheibenelement (SE) zu Scheibenelement (SE) die Richtung ändern.

3. Kalibriervorrichtung nach Anspruch 1 und 2, **dadurch gekennzeichnet, daß** die Überlagerung B' der Kühlkanäle (2) dem dreifachen Wert der lichten Weite B entspricht.

4. Kalibriervorrichtung nach Anspruch 3, **dadurch gekennzeichnet, daß** das Maß der Überlagerung B' der Kühlkanäle (2) von Scheibenelement (SE) zu Scheibenelement (SE) variiert.

5. Kalibriervorrichtung nach Anspruch 1 bis 4, **dadurch gekennzeichnet, daß** der Sprührahmen (4) einen separaten Druckwassereinlauf (4b) und einen den Profileinlauf des Scheibenelementes (SE) einrahmenden Ringkanal (4a) aufweist, der Ringkanal (4a) mit dem Profileinlauf des Scheibenelementes (SE) und den Vakuumtank 7 über einen schmalen wasserführenden Spalt (3) verbunden ist, während der Sprührahmen (4) selbst an dem Scheibenelement (SE) fest montiert ist.

6. Kalibriervorrichtung nach Anspruch 1 bis 5, **dadurch gekennzeichnet, daß** der Sprührahmen (4) aus einem durchsichtigen Werkstoff besteht.

7. Kalibriervorrichtung nach Anspruch 1 bis 6, **dadurch gekennzeichnet, daß** jedes Scheibenelement (SE) durch in ihrer Wirkung abgestufte und einzeln justierbare Paßfedern (1a, 1b) fixiert ist.

8. Kalibriervorrichtung nach Anspruch 1 bis 7, **dadurch gekennzeichnet, daß** jedes Scheibenelement (SE) über eine beidseitig vorgesehene Befestigungseinrichtung (5a,6a,5b,6b) selbstzentrierend auf das durchlaufende Profil einwirkt.

9. Verfahren zum Betreiben der Vorrichtung nach Anspruch 1 bis 8, **dadurch gekennzeichnet, daß** man ein Kunststoffprofil nach Verlassen des Extruders durch einen aus mehreren in Extrusionsrichtung innerhalb eines Vakuumbades hintereinander angeordneten Scheibenelementen bestehenden Kalibrator zieht, wobei das Kunststoffprofil nach Durchlaufen eines Sprührahmens mit einem mit Kühlmittel beaufschlagten Ringkanal für das Profil und eines Spaltes zwischen dem Sprührahmen und dem Profileinlauf über an der Profilkontaktfläche schräg zur Extrusionsachse verlaufende Kühlkanäle geführt wird.

10. Verfahren zum Betreiben der Vorrichtung nach Anspruch 9, **dadurch gekennzeichnet, daß** man das Profil sich selbstzentrierend durch die Scheibenelemente zieht.

## Claims

1. Calibration device for plastic profiles which is located downstream of the extruder and which consists of a vacuum tank filled with a flowing cooling medium, e.g. water, and several calibrators arranged in series therein, so-called disk elements, for the plastic profile extruded by the device by means of a downstream discharge, **characterised in that** the disk elements (SE) consist of several segments (S1 - S5) which have cooling channels (2) running at an angle to the extrusion axis on the profile contact surface, the clear width B of said channels being dimensioned in such a way that they overlap each other within one disk element (SE) in the longitudinal axis from the profile inlet to the profile outlet by the dimension B' and that a spray frame (4) leaving a narrow gap between said frame and the profile inlet is located before the profile inlet of the disk elements (SE).

2. Calibration device in accordance with Claim 1, **characterised in that** the cooling channels (2), seen in the direction of extrusion, change direction from disk element (SE) to disk element (SE).

3. Calibration device in accordance with Claims 1 and 2, **characterised in that** the pitch B' of the cooling channels (2) corresponds to three times the clear width B.

4. Calibration device in accordance with Claim 3, **characterised in that** the dimension of the pitch B' of the cooling channels (2) varies from disk element (SE) to disk element (SE).

5. Calibration device in accordance with Claims 1 to 4, **characterised in that** the spray frame (4) has a separate high-pressure water inlet (4b) and a circular channel (4a) framing the profile inlet of the disk element (SE), that the circular channel (4a) is connected to the profile inlet of the disk element (SE) and the vacuum tank 7 by means of a narrow water-bearing gap (3), while the spray frame (4) itself is permanently mounted on the disk element (SE).

6. Calibration device in accordance with Claims 1 to 5, **characterised in that** the spray frame (4) consists of a transparent material.

7. Calibration device in accordance with Claims 1 to 6, **characterised in that** each disk element (SE) is fixed by feather keys (1a, 1b) which are graduated in their effect and which are individually adjustable.

8. Calibration device in accordance with Claims 1 to 7, **characterised in that** each disk element (SE) has a self-centring influence on the profile as it runs through by means of an attachment device (5a, 6a, 5b, 6b) provided for on both sides.

9. Procedure for operating the device in accordance with Claims 1 to 8, **characterised in that** a plastic profile, after it has left the extruder, is pulled through a calibrator consisting of several disk elements arranged in series in the direction of extrusion within a vacuum tank, whereby the plastic profile, after it has passed through a spray frame with a circular channel where a coolant is applied for the profile, and has passed through a gap between the spray frame and the profile inlet, is conducted via cooling channels running along the profile contact surface at an angle to the axis of extrusion.

10. Procedure for operating the device in accordance with Claim 9, **characterised in that** the profile is pulled through the disk elements while centring itself.

## Revendications

1. Système de calibrage pour profilés en plastique situé en aval de l'extrudeuse, constitué d'un exhausteur rempli de liquide réfrigérant en circulation (par ex. de l'eau), contenant plusieurs calibreurs, appelés disques, disposés l'un à la suite de l'autre et traversé par le profilé en plastique tiré par un système d'extraction situé en aval, **caractérisé en ce que** les disques (D) sont composés de plusieurs segments (S1 à S5) possédant sur la surface de contact du profilé des canaux de refroidissement (2) obliques par rapport à l'axe d'extrusion, dont l'ouverture B est telle qu'ils se chevauchent de la valeur B' dans l'axe longitudinal à l'intérieur d'un disque (D) entre l'entrée et la sortie du profilé et de sorte à obtenir à l'entrée du profilé une étroite fente dans la structure de vaporisation ouverte (4) avant l'entrée du profilé des disques (D).

2. Système de calibrage selon la revendication 1, **caractérisé en ce que** les canaux de refroidissement (2) dans le sens de l'extrusion change de direction de disque (D) en disque (D).

3. Système de calibrage selon les revendications 1 et 2, **caractérisé en ce que** le chevauchement B' des canaux de refroidissement (2) correspondent à trois fois la valeur de l'ouverture B.

4. Système de calibrage selon la revendication 3, **caractérisé en ce que** la valeur de chevauchement B' des canaux de refroidissement (2) varie d'un disque (D) à l'autre (D).

5. Système de calibrage selon les revendications 1 à 4, **caractérisé en ce que** la structure de vaporisation (4) présente une arrivée d'eau sous pression séparée (4b) et un canal de ceinture (4a) entourant l'entrée du profilé de disque (D). Le canal de ceinture (4a) est relié à l'entrée du profilé du disque (D) et au réservoir sous vide 7 par une étroite fente (3) dans laquelle l'eau circule tandis que la structure de vaporisation (4) est elle-même fixée au disque (D).

6. Système de calibrage selon les revendications 1 à 5, **caractérisé en ce que** la structure de vaporisation (4) est composée de matériau transparent.

7. Système de calibrage selon les revendications 1 à 6, **caractérisé en ce que** chaque disque (D) est fixé par des clavettes parallèles (1a, 1b) étagées et réglables individuellement.

8. Système de calibrage selon les revendications 1 à 7, **caractérisé en ce que** chaque disque (D) centre le profilé le traversant par le biais d'un dispositif de fixation prévu de chaque côté (5a, 6a, 5b, 6b).

9. Méthode d'utilisation du système selon les revendications 1 à 8, **caractérisé en ce que** l'on tire un profilé en plastique sorti de l'extrudeuse au travers d'un calibreur constitué de plusieurs disques disposés l'un à la suite de l'autre dans un bain à vide dans le sens de l'extrusion. Après être passé par une structure de vaporisation dotée d'un canal de ceinture pour le profilé dans lequel du liquide réfrigérant circule ainsi que par une fente située entre la structure de vaporisation et l'entrée du profilé, le profilé en plastique passe par des canaux de refroidissement obliques par rapport à l'axe d'extrusion sur la surface de contact du profilé.

10. Méthode d'utilisation du système selon la revendication 9, **caractérisé en ce que** le profilé est centré automatiquement par les disques lors de son passage.
